(19) Europäisches Patentamt
European Patent Office
Office européen des brevets

(11) **EP 3 128 248 B1**

(12) **EUROPEAN PATENT SPECIFICATION**

(45) Date of publication and mention of the grant of the patent:
**16.02.2022 Bulletin 2022/07**

(21) Application number: **14885903.6**

(22) Date of filing: **17.03.2014**

(51) International Patent Classification (IPC):
*F25B 49/02* (2006.01)     *F25B 49/00* (2006.01)

(52) Cooperative Patent Classification (CPC):
**F25B 40/06; F25B 13/00; F25B 49/005;**
**F25B 49/022;** F25B 2313/0314; F25B 2313/0315;
F25B 2400/0401; F25B 2400/08; F25B 2600/0253;
F25B 2600/0271; F25B 2700/1931;
F25B 2700/21152; Y02B 30/70

(86) International application number:
**PCT/JP2014/057045**

(87) International publication number:
**WO 2015/140883 (24.09.2015 Gazette 2015/38)**

(54) **AIR CONDITIONER**

KLIMAANLAGE

CLIMATISEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.02.2017 Bulletin 2017/06**

(73) Proprietors:
• **Mitsubishi Electric Corporation
Chiyoda-ku
Tokyo 100-8310 (JP)**
• **AGC Inc.
Chiyoda-ku
Tokyo (JP)**

(72) Inventors:
• **MATSUI, Shigeyoshi
Tokyo 100-8310 (JP)**
• **OKAZAKI, Takashi
Tokyo 100-8310 (JP)**

• **ISHIBASHI, Akira
Tokyo 100-8310 (JP)**
• **HIGASHIIUE, Shinya
Tokyo 100-8310 (JP)**
• **ITO, Daisuke
Tokyo 100-8310 (JP)**
• **UGAJIN, Yuki
Tokyo 100-8310 (JP)**
• **NISHIYAMA, Takumi
Tokyo 100-8310 (JP)**

(74) Representative: **Mewburn Ellis LLP
Aurora Building
Counterslip
Bristol BS1 6BX (GB)**

(56) References cited:
**EP-A1- 2 306 122      WO-A1-2009/157320
WO-A1-2012/157764      WO-A1-2012/172597
JP-A- 2008 128 493      JP-A- 2008 128 493
JP-A- 2010 008 002      JP-A- 2012 132 578**

**Description**

Technical Field

The present invention relates to an air-conditioning apparatus including a controller.

Background Art

As refrigerant for use in refrigerating and air-conditioning, a zeotropic refrigerant mixture is used in which a plurality of refrigerants having different boiling points are mixed. In the refrigerating and air-conditioning apparatus in which a zeotropic refrigerant mixture is used, the boiling points of the plurality of refrigerants contained in the zeotropic refrigerant mixture differ from one another, the density, that is, the compositions of the refrigerants vary when the refrigerants circulate in the refrigerant circuit. In the case of a larger-sized such refrigerating and air-conditioning apparatus, the compositions vary more markedly. If the compositions of the refrigerants vary, a condensing temperature, an evaporating temperature and other properties change even under the same pressure, so that there is possibility that heat exchange efficiency of the heat exchanger reduces, and refrigerant noise occurs. Hence, various arts have been proposed for suppressing reduction in the heat exchange efficiency of heat exchangers like this, and suppressing occurrence of refrigerant noise.

Patent Literature 1 discloses a refrigerating and air-conditioning apparatus including a refrigeration cycle in which a zeotropic refrigerant mixture flows, and a composition calculator calculating the compositions of the refrigerants circulating in the refrigeration cycle. In Patent Literature 1, the composition calculator calculates the compositions of the refrigerants based on the temperature and the pressure of the zeotropic refrigerant mixture flowing in the bypass bypassing the compressor.

Thereby, even when circulating compositions change due to refrigerant leakage that takes place while the refrigerating and air-conditioning apparatus is used, an erroneous operation at the time of charging refrigerants, or other troubles, the circulating compositions in the refrigeration cycle are accurately detected, reduction in the heat exchange efficiency of the heat exchanger is suppressed, and occurrence of refrigerant noise is suppressed.

Citation List

Patent Literature

Patent Literature 1: Japanese Patent No. 2948105 (Page 1 to Page 4.) WO 2012/172597 proposes an air conditioner with a control device which controls the opening / closing of a bypass passage.

JP 2008 128493 proposes a refrigerating circuit which avoids decomposition of C-I binding. EP 2 306 122 proposes a compressor which avoids decomposition of a refrigerant which includes a double bond.

Summary of Invention

Technical Problem

If the zeotropic refrigerant mixture used in the refrigerating and air-conditioning apparatus contains a refrigerant to undergo disproportionation, disproportionation is likely to occur when the composition of the refrigerant under the condition of high-temperature and high-pressure gas is large. Here, disproportionation refers to a chemical reaction in which molecules of the same kind react with each other, and produce a different product. In the refrigerating and air-conditioning apparatus disclosed in Patent Literature 1, a zeotropic refrigerant mixture of R32 refrigerant and R134a refrigerant is used as refrigerant, and in Patent Literature 1, no consideration is given to prevention of occurrence of disproportionation when the refrigerant in which the disproportionation can occur is used.

The present invention has been made to overcome the problem. An object of the present invention is to provide an air-conditioning apparatus that prevents occurrence of disproportionation even when a zeotropic refrigerant mixture to which refrigerant to undergo disproportionation is added is used. The invention is defined in the independent claim. The dependent claims describe preferred embodiments of the invention.

Solution to Problem

An air-conditioning apparatus according to the present invention is defined in claim 1.

Advantageous Effects of Invention

According to the present invention, the threshold value determination unit determines the threshold temperature and the threshold pressure from the composition acquired by the composition acquisition unit, and the disproportionation suppression unit sets the discharge temperature and the discharge pressure to be lower than the threshold temperature and the threshold pressure. Consequently, disproportionation of the refrigerant to undergo disproportionation can be suppressed.

Brief Description of Drawings

[Fig. 1] Fig. 1 is a circuit diagram illustrating an air-conditioning apparatus 1 according to a first embodiment.
[Fig. 2] Fig. 2 is a block diagram illustrating a controller 50 in the first embodiment.
[Fig. 3] Fig. 3 is a graph illustrating a composition table.
[Fig. 4] Fig. 4 is a graph illustrating a pressure variation in the composition table.
[Fig. 5] Fig. 5 is a graph illustrating a temperature pressure table.
[Fig. 6] Fig. 6 is a flowchart illustrating an operation of the air-conditioning apparatus 1 according to the first embodiment.
[Fig. 7] Fig. 7 is a circuit diagram illustrating an air-conditioning apparatus 100 according to a second embodiment.
[Fig. 8] Fig. 8 is a block diagram illustrating a controller 150 in the second embodiment.
[Fig. 9] Fig. 9 is a flowchart illustrating an operation of the air-conditioning apparatus 100 according to the second embodiment.
[Fig. 10] Fig. 10 is a circuit diagram illustrating an air-conditioning apparatus 200 according to a third embodiment.
[Fig. 11] Fig. 11 is a block diagram illustrating a controller 250 in the third embodiment.
[Fig. 12] Fig. 12 is a graph illustrating a composition table.
[Fig. 13] Fig. 13 is a flowchart illustrating an operation of the air-conditioning apparatus 200 according to the third embodiment.

Description of Embodiments

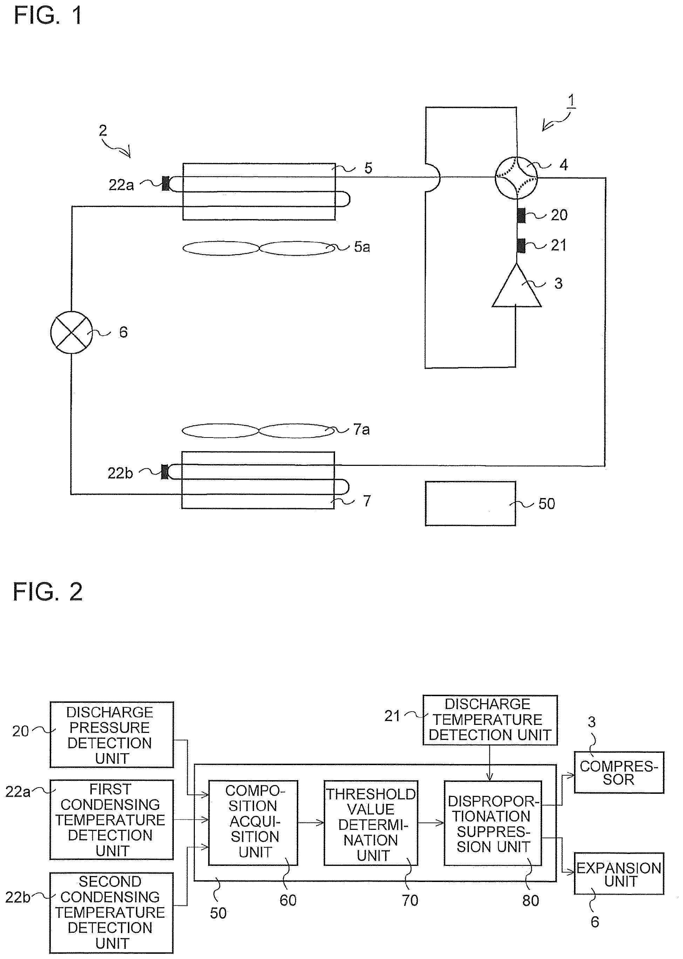

Embodiments of an air-conditioning apparatus according to the present invention will be described below with reference to the drawings. Note that the present invention is not limited by the embodiments that will be described hereunder. Further, in the following drawings including Fig. 1, size relations of the respective component members may differ from the actual size relations.

First Embodiment

Fig. 1 is a circuit diagram illustrating an air-conditioning apparatus 1 according to a first embodiment. The air-conditioning apparatus 1 will be discussed based on Fig. 1. As illustrated in Fig. 1, the air-conditioning apparatus 1 includes a refrigerant circuit 2 and a controller 50.
In the refrigerant circuit 2, a refrigerant mixture containing a refrigerant to undergo disproportionation flows, and a compressor 3, a four-way valve 4, a first heat exchanger 5, an expansion unit 6, and a second heat exchanger 7 are connected by pipes. The compressor 3 compresses the refrigerant mixture, and the four-way valve 4 switches a direction in which the refrigerant mixture flows in the refrigerant circuit 2. Further, the first heat exchanger 5 is an exterior heat exchanger that exchanges heat of the refrigerant mixture with heat of outdoor air, for example. Here, the refrigerant circuit 2 is provided with a first fan 5a, and the first fan 5a conveys outdoor air to the first heat exchanger 5.
The refrigerant mixture contains the refrigerant to undergo disproportionation, as described above. In the first embodiment, as the refrigerant to undergo disproportionation, HF01123 refrigerant is used. The HF01123 refrigerant is refrigerant that is likely to undergo disproportionation. When the refrigerant to undergo disproportionation is contained, it is possible that disproportionation is to occur when the composition of the refrigerant under the conditions of high-temperature and high-pressure gas is large. Here, disproportionation refers to a chemical reaction in which molecules of the same kind react with each other, and produce a different product. Further, refrigerants which are added to HF01123 refrigerant can be HF01234yf refrigerant, and HF01234ze refrigerant, for example. The HF01234yf refrigerant and HF1234ze refrigerant are refrigerants having higher boiling points than that of HF01123 refrigerant.
Further, the expansion unit 6 expands the refrigerant mixture. The second heat exchanger 7 is an interior heat exchanger that exchanges heat of the refrigerant mixture with heat of indoor air, for example. Here, the refrigerant circuit 2 is provided with a second fan 7a, and the second fan 7a conveys indoor air to the second heat exchanger 7.

Further, the refrigerant circuit 2 includes a discharge pressure detection unit 20, a first condensing temperature detection unit 22a and a second condensing temperature detection unit 22b. The discharge pressure detection unit 20 is provided at a discharge side of the compressor 3, and detects a discharge pressure of the refrigerant mixture.

Further, the first condensing temperature detection unit 22a and the second condensing temperature detection unit 22b each detect a condensing temperature of the refrigerant mixture. The first condensing temperature detection unit 22a and the second condensing temperature detection unit 22b are provided at outlet sides of the heat exchangers which act as condensers, of the first heat exchanger 5 and the second heat exchanger 7. For example, the first condensing temperature detection unit 22a is provided at an outlet side of the first heat exchanger 5 that serves as a condenser at a time of a cooling operation, and the second condensing temperature detection unit 22b is provided at an outlet side of the second heat exchanger 7 that serves as a condenser at a time of a heating operation. That is, at the time of a cooling operation, the first condensing temperature detection unit 22a is used, and at the time of a heating operation, the second condensing temperature detection unit 22b is used.

Further, the refrigerant circuit 2 includes a discharge temperature detection unit 21. The discharge temperature detection unit 21 is provided at the discharge side of the compressor 3, and detects a discharge temperature of the refrigerant mixture.

Fig. 2 is a block diagram illustrating the controller 50 in the first embodiment. As shown in Fig. 2, the controller 50 is configured to control an operation of the refrigerant circuit 2. The controller 50 includes a composition acquisition unit 60, a threshold value determination unit 70, and a disproportionation suppression unit 80.

The composition acquisition unit 60 acquires a composition of the refrigerant to undergo disproportionation. More specifically, the composition acquisition unit 60 acquires the composition of HFO1123 refrigerant, based on the discharge pressure detected by the discharge pressure detection unit 20, the condensing temperature detected by the first condensing temperature detection unit 22a or the second condensing temperature detection unit 22b, and a composition table representing a relation of the discharge pressure, the condensing temperature and the composition.

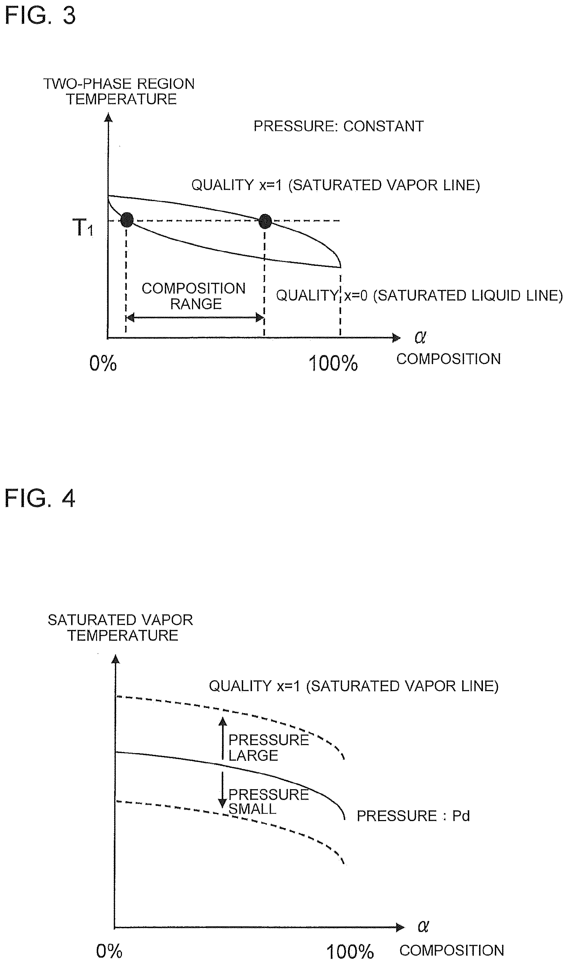

Fig. 3 is a graph illustrating the composition table, Fig. 4 is a graph illustrating a pressure variation on the composition table. In Fig. 3, a horizontal axis represents the composition of the HFO1123 refrigerant, and a vertical axis represents a two-phase region temperature. The composition refers to a composition ratio (proportions) of the respective refrigerants mixed in the refrigerant mixture. Further, in Fig. 3, quality x = 0 (a saturated liquid line) and quality x = 1 (a saturated vapor line) are illustrated with the discharge pressure set as constant. As shown in Fig. 3, when quality x = 0 (the saturated liquid line) at a condensing temperature $T_1$ detected by the first condensing temperature detection unit 22a or the second condensing temperature detection unit 22b, the composition of the HFO1123 refrigerant exhibits a minimum value amin. When quality x = 1 (the saturated vapor line) at the condensing temperature $T_1$ detected by the first condensing temperature detection unit 22a or the second condensing temperature detection unit 22b, the composition of the HFO1123 refrigerant exhibits a maximum value $\alpha$max. That is, the composition of the HFO1123 refrigerant varies in a range from the minimum value amin to the maximum value $\alpha$max.

Further, in Fig. 4, a horizontal axis represents the composition of the HFO1123 refrigerant, and a vertical axis represents a saturated vapor temperature. As illustrated in Fig. 4, when the discharge pressure increases, the quality x = 1 (the saturated vapor line) ascends, and when the discharge pressure decreases, the quality x = 0 (the saturated liquid line) descends. By using the composition tables as illustrated in Fig. 3 and Fig. 4, the composition of the HFO1123 refrigerant is acquired from the condensing temperature and the discharge pressure.

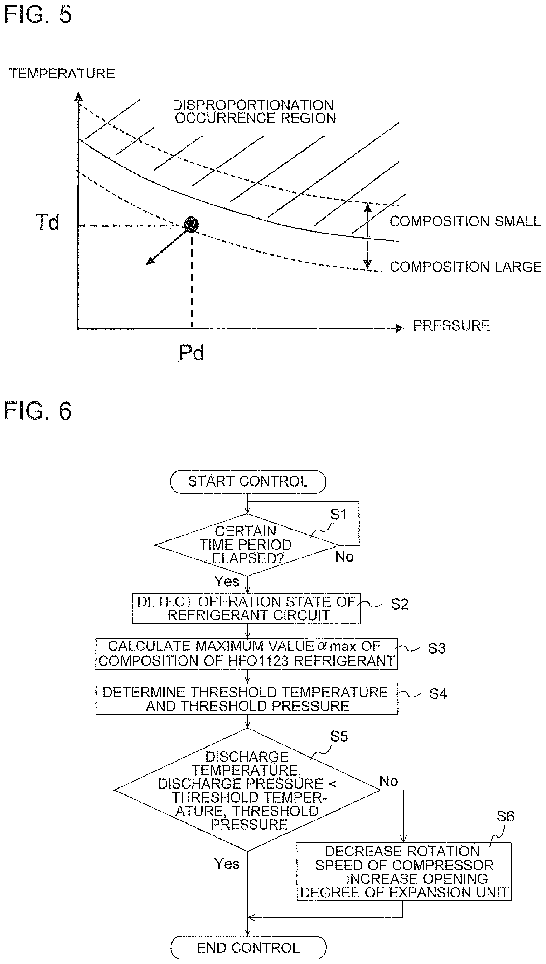

The threshold value determination unit 70 determines a threshold temperature and a threshold pressure, based on the composition acquired by the composition acquisition unit 60, and a temperature pressure table representing a relation between the discharge temperature and the discharge pressure. Fig. 5 is a graph illustrating the temperature pressure table. In Fig. 5, the horizontal axis represents the discharge pressure and the vertical axis represents the condensing temperature. As illustrated in Fig. 5, a diagonally shaded portion at an upper part of a graph curve represents a disproportionation occurrence region, and when the composition of the HFO1123 refrigerant decreases, the graph curve ascends, so that the disproportionation occurrence region is narrowed. Consequently, ranges of selection of the discharge pressure and the discharge temperature increase. When the composition of the HFO1123 refrigerant increases, the graph curve descends, and the disproportionation occurrence region increases. Consequently, the ranges of selection of the discharge pressure and the discharge temperature decrease.

In the first embodiment, the threshold temperature and the threshold pressure are determined by using the maximum value $\alpha$max of the composition of the HFO1123 refrigerant, as the composition of the HFO1123 refrigerant. As described above, the HFO1123 refrigerant is refrigerant to undergo disproportionation. When the refrigerant to undergo disproportionation is contained in the refrigerant mixture, disproportionation is likely to occur when the composition of the HFO1123 refrigerant is large. Consequently, the threshold temperature and the threshold pressure are determined by using the maximum value $\alpha$max of the composition of the HFO1123 refrigerant to make disproportionation more difficult to occur, to enhance safety. As illustrated in Fig. 5, the threshold value determination unit 70 determines the threshold temperature and the threshold pressure so that the composition of the HFO1123 refrigerant is set to be below the graph curve when the composition of the HFO1123 refrigerant has the maximum value $\alpha$max.

The disproportionation suppression unit 80 suppresses disproportionation of the refrigerant mixture by reducing the discharge temperature and the discharge pressure of the refrigerant mixture to be lower than the threshold temperature and the threshold pressure that are determined by the threshold value determination unit 70. More specifically, the disproportionation suppression unit 80 adjusts a rotation speed of the compressor 3, and adjusts an opening degree of the expansion unit 6. Either one or both of the rotation speed of the compressor 3 and the opening degree of the expansion unit 6 may be adjusted. The discharge temperature of the refrigerant mixture is detected by the discharge temperature detection unit 21. Further, the discharge pressure can be calculated based on the discharge temperature detected by the discharge temperature detection unit 21.

As illustrated in Fig. 5, disproportionation is likely to occur in a state of high-temperature and high-pressure gas. Consequently, in the refrigerant circuit 2, the discharge temperature and the discharge pressure at the discharge side of the compressor 3, where the refrigerant mixture has the highest temperature and pressure, are controlled. For example, when the discharge temperature or the discharge pressure of the refrigerant mixture is respectively the threshold temperature or the threshold pressure, or greater, the disproportionation suppression unit 80 reduces the discharge temperature or the discharge pressure of the refrigerant mixture by reducing the rotation speed of the compressor 3 or increasing the opening degree of the expansion unit 6.

Next, operations of the cooling operation and the heating operation of the air-conditioning apparatus 1 according to the first embodiment will be described.

First, an operation in the cooling operation will be described. The compressor 3 sucks the refrigerant mixture, and compresses the refrigerant mixture to discharge the refrigerant mixture in the state of high-temperature and high-pressure gas. The discharged refrigerant mixture passes through the four-way valve 4, and flows into the first heat exchanger 5, and the first heat exchanger 5 condenses the refrigerant mixture by heat exchange with outdoor air that is supplied by the first fan 5a. The condensed refrigerant mixture flows into the expansion unit 6, and the expansion unit 6 decompresses the condensed refrigerant mixture. Subsequently, the decompressed refrigerant mixture flows into the second heat exchanger 7, and the second heat exchanger 7 evaporates the refrigerant mixture by heat exchange with the indoor air that is supplied by the second fan 7a. Subsequently, the evaporated refrigerant mixture passes through the four-way valve 4 and is sucked by the compressor 3.

Next, an operation in the heating operation will be described. The compressor 3 sucks the refrigerant mixture, and compresses the refrigerant mixture to discharge it in a state of high-temperature and high-pressure gas. The discharged refrigerant mixture passes through the four-way valve 4, and flows into the second heat exchanger 7, and the second heat exchanger 7 condenses the refrigerant mixture by heat exchange with the indoor air that is supplied by the second fan 7a. The condensed refrigerant mixture flows into the expansion unit 6, and the expansion unit 6 decompresses the condensed refrigerant mixture. Subsequently, the decompressed refrigerant mixture flows into the first heat exchanger 5, and the first heat exchanger 5 evaporates the refrigerant mixture by heat exchange with outdoor air that is supplied by the first fan 5a. Subsequently, the evaporated refrigerant mixture passes through the four-way valve 4 and is sucked by the compressor 3.

Next, an operation of the air-conditioning apparatus 1 according to the first embodiment will be discussed. Fig. 6 is a flowchart illustrating the operation of the air-conditioning apparatus 1 according to the first embodiment. As illustrated in Fig. 6, it is determined whether or not a fixed time period elapses after control of the air-conditioning apparatus 1 is started (step S1). When it is determined that the fixed time period elapses in step S1, an operation state of the refrigerant circuit 2 is detected next (step S2). More specifically, the discharge pressure is detected by the discharge pressure detection unit 20, and the condensing temperature is detected by the first condensing temperature detection unit 22a or the second condensing temperature detection unit 22b.

Next, the maximum value $\alpha$max of the composition of the HF01123 refrigerant in the refrigerant mixture that is circulating is acquired by the composition acquisition unit 60, based on the discharge pressure detected by the discharge pressure detection unit 20, the condensing temperature detected by the first condensing temperature detection unit 22a or the second condensing temperature detection unit 22b, and the composition table (step S3). Subsequently, based on the maximum value $\alpha$max of the composition of the HF01123 refrigerant acquired by the composition acquisition unit 60 and the temperature pressure table, the threshold temperature and the threshold pressure are determined by the threshold value determination unit 70 (step S4).

Thereafter, by the disproportionation suppression unit 80, it is determined whether or not the discharge temperature and the discharge pressure of the refrigerant mixture are lower than the threshold temperature and the threshold pressure that are determined by the threshold value determination unit 70 (step S5). When it is determined that the discharge temperature and the discharge pressure are respectively lower than the threshold temperature and the threshold pressure (Yes in step S5), the control is ended. When it is determined that the discharge temperature and the discharge pressure are the threshold temperature and the threshold pressure or greater (No in step S5), the rotation speed of the compressor 3 is decreased, or the expansion unit 6 is opened by the disproportionation suppression unit 80 (step S6). Thereby, the discharge temperature and the discharge pressure are set to be lower than the threshold temperature and the threshold pressure. Thereafter, the control is ended.

As described above, in the air-conditioning apparatus 1 according to the first embodiment, the threshold value determination unit 70 determines the threshold temperature and the threshold pressure from the composition acquired by the composition acquisition unit 60, and the disproportionation suppression unit 80 sets the discharge temperature and the discharge pressure to be lower than the threshold temperature and the threshold pressure. Consequently, disproportionation of the refrigerant where disproportionation can occur can be suppressed.

Further, since in the first embodiment, the threshold temperature and the threshold pressure are determined by using the maximum value $\alpha$max of the composition of the HFO1123 refrigerant, disproportionation is made more difficult to occur, to enhance safety. Further, in the first embodiment, the refrigerant mixture is a mixture in which refrigerants with a global warming potential (GWP) of zero such as HF01123 refrigerant, HF01234yf refrigerant and HF01234ze refrigerant are mixed. Consequently, environmental performance is high. Further, there is no need to provide a bypass or other circuits in the refrigerant circuit 2, reduction in size and cost of an outdoor unit in which the refrigerant circuit 2 is accommodated can be achieved.

Second Embodiment

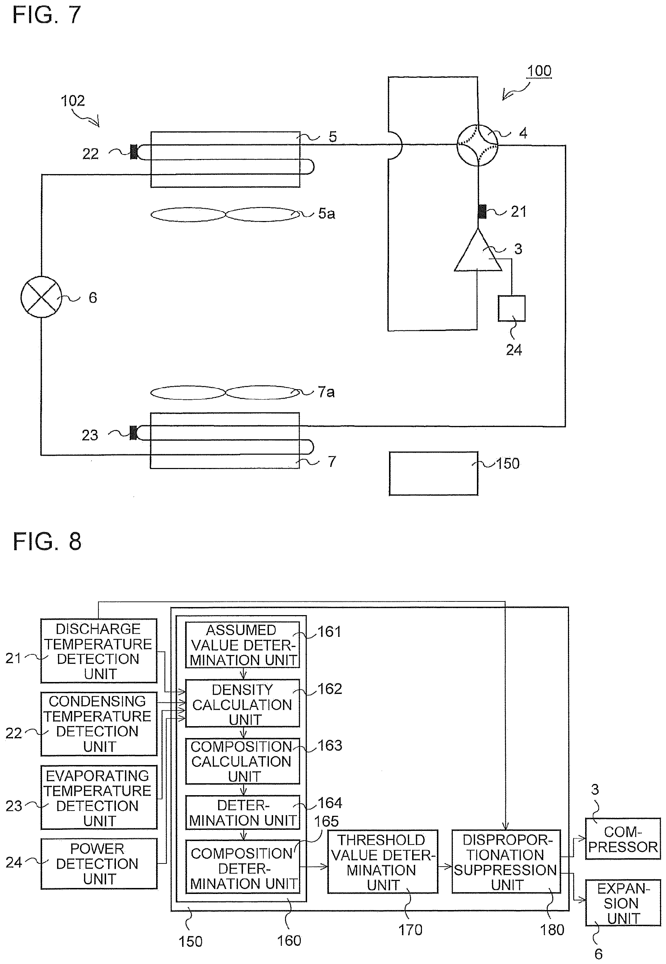

Next, an air-conditioning apparatus 100 according to a second embodiment will be discussed. Fig. 7 is a circuit diagram illustrating the air-conditioning apparatus 100 according to the second embodiment. As illustrated in Fig. 7, the second embodiment differs from the first embodiment in that a refrigerant circuit 102 includes the discharge temperature detection unit 21, a condensing temperature detection unit 22, an evaporating temperature detection unit 23, and a power detection unit 24, and does not include the discharge pressure detection unit 20. In the second embodiment, explanation of the components common to the first embodiment will be omitted by assigning the components with the same reference signs, and the difference from the first embodiment will be mainly described.

The condensing temperature detection unit 22 is provided at an outlet side of one that serves as a condenser, of the first heat exchanger 5 and the second heat exchanger 7. Further, the evaporating temperature detection unit 23 is provided at an outlet side of one that serves as an evaporator, of the first heat exchanger 5 and the second heat exchanger 7.

In the case of the cooling operation, the first heat exchanger 5 serves as the condenser, and the second heat exchanger 7 serves as the evaporator. In Fig. 6, the case of the cooling operation is assumed, the condensing temperature detection unit 22 is provided at the outlet side of the first heat exchanger 5, and the evaporating temperature detection unit 23 is provided at the outlet side of the second heat exchanger 7. Since in the case of the heating operation, the first heat exchanger 5 serves as the evaporator, and the second heat exchanger 7 serves as the condenser, the evaporating temperature is detected by the condensing temperature detection unit 22, and the condensing temperature is detected by the evaporating temperature detection unit 23. Further, the power detection unit 24 detects power consumption of the compressor 3.

Fig. 8 is a block diagram illustrating a controller 150 in the second embodiment. As illustrated in Fig. 8, a composition acquisition unit 160 in the controller 150 includes an assumed value determination unit 161, a density calculation unit 162, a composition calculating unit 163, a determination unit 164 and a composition determination unit 165.

The assumed value determination unit 161 determines a composition assumed value of the refrigerant to undergo disproportionation.

The density calculation unit 162 calculates a suction density with which the refrigerant to undergo disproportionation is sucked by the compressor 3, based on the discharge temperature detected by the discharge temperature detection unit 21, the condensing temperature detected by the condensing temperature detection unit 22, the evaporating temperature detected by the evaporating temperature detection unit 23, the power consumption detected by the power detection unit 24, and the composition assumed value determined by the assumed value determination unit 161. First, the discharge pressure of the refrigerant mixture at the discharge side of the compressor 3 is calculated. When the condensing temperature is set as $T_2$, and the composition assumed value is set as $\alpha$s, a discharge pressure Pd in the case of quality X = 1 is calculated from expression (1) as follows.

[Mathematical expression 1]

$$Pd = P(T_2, \alpha s, X{=}1) \cdot \cdots \cdot (1)$$

Next, a suction pressure Ps of the refrigerant mixture at the suction side of the compressor 3 is calculated. When the evaporating temperature is set as $T_3$, the suction pressure Ps in the case of quality X=1 is calculated from expression (2) as follows.

[Mathematical expression 2]

$$Ps = P(T_3, \alpha s, X = 1) \cdot \cdot \cdot \cdot (2)$$

Subsequently, entropy Sd of the refrigerant mixture at the discharge side of the compressor 3 is calculated by using the discharge pressure Pd calculated in expression (1) described above, and the discharge temperature detected by the discharge temperature detection unit 21. When the discharge temperature is set as Td, the entropy Sd is calculated from expression (3) as follows.

[Mathematical expression 3]

$$Sd = S(Pd, Td, \alpha s) \cdot \cdot \cdot \cdot (3)$$

Thereafter, an enthalpy difference before and after the refrigerant mixture is compressed by the compressor 3 is calculated by using the discharge pressure Pd calculated in expression (1) described above, the suction pressure Ps calculated in expression (2) described above, the entropy Sd calculated in expression (3) described above, the discharge temperature Td and the composition assumed value $\alpha s$. Enthalpy at the discharge side of the compressor 3 is set as hd, and enthalpy at the suction side of the compressor 3 is set as hs, an enthalpy difference $\Delta h$ is calculated from expression (4) as follows.

[Mathematical expression 4]

$$\Delta h = hd - hs = h(Pd, Td, \alpha s) - h(Ps, Sd, \alpha s) \cdot \cdot \cdot \cdot (4)$$

Further, a compressor efficiency $\eta c$ is calculated from expression (5) as follows, by using the discharge pressure Pd calculated in expression (1) described above, the suction pressure Ps calculated in expression (2) described above, the discharge temperature Td, the composition assumed value $\alpha s$ and a rotation speed N of the compressor 3.

[Mathematical expression 5]

$$\eta c = f1(Pd, Ps, Td, N, \alpha s) \cdot \cdot \cdot \cdot (5)$$

Further, a compressor volume efficiency $\eta v$ is calculated from expression (6) as follows by using the discharge pressure Pd calculated in expression (1) described above, the suction pressure Ps calculated in expression (2) described above, the discharge temperature Td, the composition assumed value $\alpha s$ and the rotation speed N of the compressor 3.

[Mathematical expression 6]

$$\eta v = f2(Pd, Ps, Td, N, \alpha s) \cdot \cdot \cdot \cdot (6)$$

The compressor efficiency $\eta c$ and the compressor volume efficiency $\eta v$ may be obtained by a simulation, a unit evaluation test of the compressor 3, or both the simulation and the unit evaluation test. Here, power consumption W of the compressor 3 and a circulation amount Gr of the refrigerant mixture are obtained from expression (7) and expression (8) as follows when a stroke volume of the compressor 3 is set as Vst, and a suction density with which the refrigerant mixture is sucked by the compressor 3 is set as ps.

[Mathematical expression 7]

$$W = Gr \cdot \Delta h / \eta c \cdot \cdot \cdot \cdot (7)$$

[Mathematical expression 8]

$$Gr = \rho s \cdot N \cdot Vst \cdot \eta v \cdot \cdot \cdot \cdot (8)$$

Subsequently, when expression (7) and expression (8) described above are transformed, expression (9) as follows is obtained. The suction density ps is calculated from expression (9) as follows by using the power consumption W detected by the power detection unit 24, the enthalpy difference $\Delta h$ calculated in expression (4) described above, the rotation speed N of the compressor 3, the stroke volume Vst of the compressor 3, $\eta v$ that is calculated in expression (6) described above, and ηc calculated in expression (5) described above.

[Mathematical expression 9]

$$\rho s = W / (\Delta h \cdot N \cdot Vst \cdot \eta v / \eta c) \cdots \cdots (9)$$

In this way, the density calculation unit 162 calculates the suction density ρs with which the HF01123 refrigerant is sucked by the compressor 3. Here, a density of the HF01123 refrigerant is set as ρl, and a density of the refrigerants mixed with the HF01123 refrigerant is set as ρh. In the first embodiment, the density ρl of the HF01123 refrigerant is obtained, that is, ρs = ρl. In calculating the suction density ρs of the HF01123 refrigerant, a value with low sensitivity is set as a constant, and calculation of the value may be omitted.

The composition calculating unit 163 calculates a composition calculation value αc of the refrigerant to undergo disproportionation, based on the suction density ρs calculated in the density calculation unit 162. More specifically, the composition calculation value αc of the HF01123 refrigerant is calculated from expression (10) as follows by using the suction density ρs calculated in expression (9) described above and the suction pressure Ps calculated in expression (2) described above.

[Mathematical expression 10]

$$\rho s = f3(Ps, \alpha c) \cdots \cdots (10)$$

The determination unit 164 determines whether or not the composition assumed value αs determined by the assumed value determination unit 161, and the composition calculation value αc calculated in the composition calculating unit 163 agree with each other. More specifically, it is determined whether or not the composition assumed value αs determined by the assumed value determination unit 161 and the composition calculation value αc calculated from expression (10) described above agree with each other. Here, the "agree" does not necessarily implicate complete equivalence, but there may be an allowance for values to "agree" with each other.

The composition determination unit 165 determines the composition assumed value αs as the composition of the refrigerant to undergo disproportionation, when it is determined that the composition assumed value αs and the composition calculation value αc agree with each other in the determination unit 164.

Subsequently, the threshold value determination unit 170 determines the threshold temperature and the threshold pressure, based on the composition acquired by the composition acquisition unit 160, and the temperature pressure table, and in the second embodiment, as the composition of the HF01123 refrigerant, the maximum value αmax of the composition of the HF01123 refrigerant is also used.

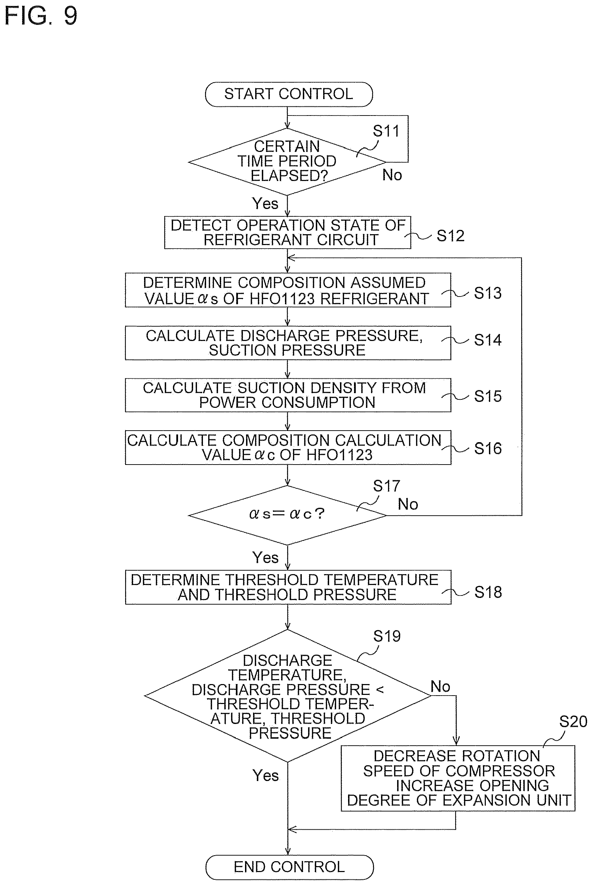

Next, an operation of the air-conditioning apparatus 100 according to the second embodiment will be described. Fig. 9 is a flowchart illustrating the operation of the air-conditioning apparatus 100 according to the second embodiment. As illustrated in Fig. 9, it is determined whether or not a fixed time period elapses after control of the air-conditioning apparatus 100 is started (step S11). When it is determined that the fixed time period elapses in step S11, an operation state of the refrigerant circuit 102 is detected next (step S12). More specifically, the discharge temperature is detected by the discharge temperature detection unit 21, the condensing temperature is detected by the condensing temperature detection unit 22, the evaporating temperature is detected by the evaporating temperature detection unit 23, and the power consumption is detected by the power detection unit 24.

Next, the composition assumed value αs of the HF01123 refrigerant is determined by the assumed value determination unit 161 (step S13). Subsequently, the discharge pressure and the suction pressure are calculated (step S14), the suction density is calculated by the density calculation unit 162, from the power consumption of the compressor 3 and the discharge pressure and the suction pressure that are calculated (step S15).

Thereafter, the composition calculation value αc of the HF01123 refrigerant is calculated by the composition calculating unit 163, based on the suction density calculated in the density calculation unit 162 (step S16). Subsequently, it is determined whether or not the composition assumed value αs determined by the assumed value determination unit 161 and the composition calculation value αc calculated in the composition calculating unit 163 agree with each other by the determination unit 164 (step S17). When it is determined that the composition assumed value αs and the composition calculation value αc do not agree with each other by the determination unit 164 (No in step S17), the flow returns to step S13, and the composition assumed value αs is determined again. Subsequently, step S13 through step S17 are repeated until the composition assumed value αs and the composition calculation value αc agree with each other.

When it is determined that the composition assumed value αs and the composition calculation value αc agree with each other by the determination unit 164 (Yes in step S17), the composition assumed value αs is determined as the maximum value αmax of the composition of the HFO1123 refrigerant by the composition determination unit 165, and the threshold temperature and the threshold pressure are determined by the threshold value determination unit 170, based on the maximum value $\alpha$max of the composition of the HF01123 refrigerant, which is acquired by the composition acquisition unit 160 and the temperature pressure table (step S18).

Thereafter, it is determined whether or not the discharge temperature and the discharge pressure of the refrigerant mixture are lower than the threshold temperature and the threshold pressure that are determined by the threshold value determination unit 170 by the disproportionation suppression unit 80 (step S19). When it is determined that the discharge temperature and the discharge pressure are lower than the threshold temperature and the threshold pressure (Yes in step S19), the control is ended. When it is determined that the discharge temperature and the discharge pressure are the threshold temperature and the threshold pressure or greater (No in step S19), the rotation speed of the compressor 3 is reduced, or the expansion unit 6 is opened by the disproportionation suppression unit 80 (step S20). Thereby, the discharge temperature and the discharge pressure are set to be lower than the threshold temperature and the threshold pressure. Thereafter, the control is ended.

As described above, in the air-conditioning apparatus 100 according to the second embodiment, the threshold value determination unit 170 determines the threshold temperature and the threshold pressure from the composition acquired by the composition acquisition unit 160, and the disproportionation suppression unit 80 sets the discharge temperature and the discharge pressure to be lower than the threshold temperature and the threshold pressure. Consequently, disproportionation of the HF01123 refrigerant can be suppressed.

Further, since in the second embodiment, the threshold temperature and the threshold pressure are determined by using the maximum value $\alpha$max of the composition of the HFO1123 refrigerant, disproportionation is made more difficult to occur, and safety is enhanced. Further, in the second embodiment, the refrigerant mixture is the mixture in which refrigerants with a global warming potential (GWP) of zero, such as HF01123 refrigerant, HF01234yf and HF01234ze are mixed. Consequently, environmental performance is high. Further, since there is no need to provide a bypass or other paths in the refrigerant circuit 102, reduction in size and cost of an outdoor unit in which the refrigerant circuit 102 is accommodated can be achieved.

Furthermore, in the second embodiment, the composition of the HF01123 refrigerant is acquired without using a pressure detection unit. Consequently, cost can be reduced correspondingly to the pressure detection unit that is not required.

Third Embodiment

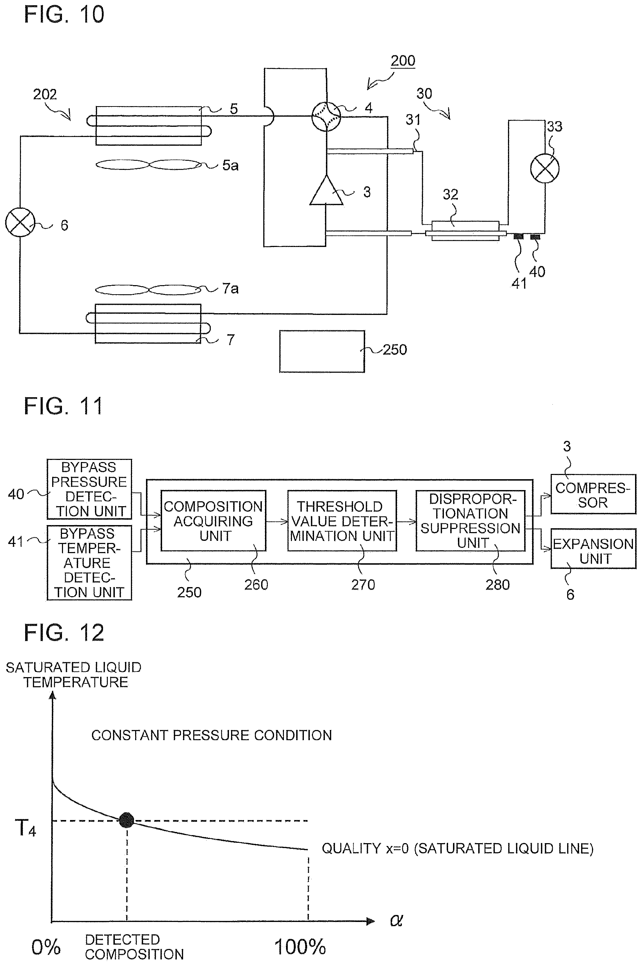

Next, an air-conditioning apparatus 200 according to a third embodiment will be discussed. Fig. 10 is a circuit diagram illustrating the air-conditioning apparatus 200 according to the third embodiment. The third embodiment differs from the first and second embodiments in the point that the third embodiment includes a bypass 30. In the third embodiment, explanation of the components common to the first and second embodiments will be omitted by being assigned with the same reference signs, and a difference from the first and second embodiments will be mainly described.

As shown in Fig. 10, the air-conditioning apparatus 200 includes a bypass 30 bypassing the discharge side of the compressor 3 and the suction side of the compressor 3. The bypass 30 is formed by a cooler 32 and a bypass expansion unit 33 being connected by a bypass pipe 31. The cooler 32 cools the refrigerant mixture discharged from the compressor 3, and is a double-tube heat exchanger, for example. Further, the bypass expansion unit 33 expands the refrigerant mixture cooled in the cooler 32. The refrigerant mixture flowing into the bypass 30 is brought into a saturated liquid state by the cooler 32 and the bypass expansion unit 33.

Further, the bypass 30 includes a bypass pressure detection unit 40 and a bypass temperature detection unit 41. The bypass pressure detection unit 40 is provided at an outlet side of the bypass expansion unit 33, and detects a bypass pressure of the refrigerant mixture. Further, the bypass temperature detection unit 41 is provided at the outlet side of the bypass expansion unit 33, and detects a bypass temperature of the refrigerant mixture.

Fig. 11 is a block diagram illustrating a controller 250 in the third embodiment. As illustrated in Fig. 11, a composition acquisition unit 260 in the controller 250 acquires a composition of refrigerant to undergo disproportionation, based on the bypass pressure detected by the bypass pressure detection unit 40, the bypass temperature detected by the bypass temperature detection unit 41, a composition table representing a relation of a discharge pressure, a condensing temperature and a composition.

Fig. 12 is a graph illustrating the composition table. In Fig. 12, a horizontal axis represents the composition of the HF01123 refrigerant, and a vertical axis represents a saturated liquid temperature. In Fig. 12, quality x = 0 (a saturated liquid line) with the discharge pressure set as constant is illustrated. As illustrated in Fig. 12, the composition at a time of a bypass temperature $T_4$ detected by the bypass temperature detection unit 41 is a composition $\alpha$ of the HF01123 refrigerant. In the third embodiment, the refrigerant mixture is brought into a saturated liquid state by the cooler 32 and the bypass expansion unit 33, and therefore, attention can be paid to only quality x = 0 (the saturated liquid line). Thereby, in the third embodiment, the composition $\alpha$ of the HF01123 refrigerant is uniquely obtained.

Next, an operation in the bypass 30 of the air-conditioning apparatus 200 according to the third embodiment will be described. The compressor 3 sucks the refrigerant mixture, and compresses the refrigerant mixture to discharge the refrigerant mixture in a state of high-temperature and high-pressure gas. A part of the discharged refrigerant mixture passes through the bypass pipe 31 and flows into the bypass 30. Subsequently, the part of the refrigerant mixture flows into the cooler 32, and the cooler 32 cools the refrigerant mixture. The cooled refrigerant mixture flows into the bypass expansion unit 33, and the bypass expansion unit 33 decompresses the cooled refrigerant mixture. Thereby, the refrigerant mixture is brought into a state of a saturated liquid. The refrigerant mixture in the saturated liquid state flows into the cooler 32 that is the double-tube heat exchanger, and exchanges heat with the refrigerant mixture which just flows into the bypass 30, that is, high-temperature and high-pressure gas refrigerant, and is heated. The heated refrigerant mixture flows out of the bypass 30, and is sucked by the compressor 3.

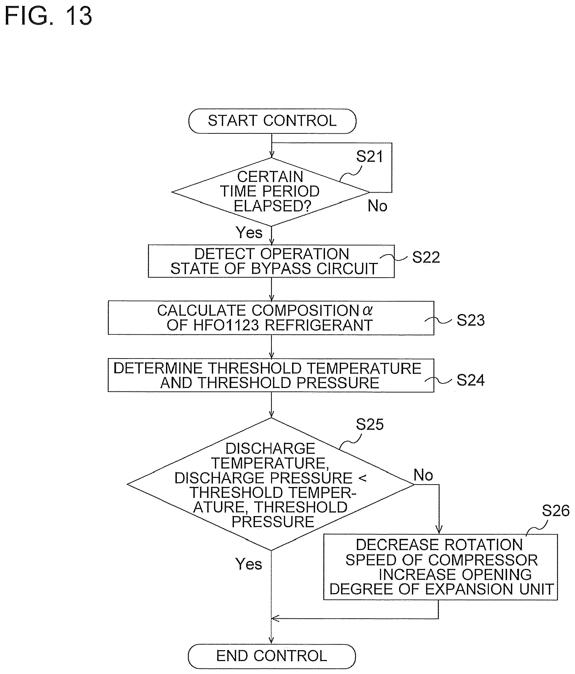

Next, an operation of the air-conditioning apparatus 200 according to the third embodiment of the present invention will be described. Fig. 13 is a flowchart illustrating the operation of the air-conditioning apparatus 200 according to the third embodiment. As illustrated in Fig. 13, it is determined whether or not a fixed time period elapses after control of the air-conditioning apparatus 200 is started (step S21). When it is determined that the fixed time period elapses in step S21, an operation state of the bypass 30 in the refrigerant circuit 202 is detected (step S22). More specifically, the bypass pressure is detected by the bypass pressure detection unit 40, and the bypass temperature is detected by the bypass temperature detection unit 41.

Next, the composition $\alpha$ of the HF01123 refrigerant, in the refrigerant mixture that is circulating, is acquired by a composition acquisition unit 260, based on the bypass pressure detected by the bypass pressure detection unit 40, the bypass temperature detected by the bypass temperature detection unit 41, and the composition table (step S23). Subsequently, a threshold temperature and a threshold pressure are determined by a threshold value determination unit 270, based on the composition $\alpha$ of the HF01123 refrigerant acquired by the composition acquisition unit 260, and a temperature pressure table (step S24).

Thereafter, it is determined whether or not the discharge temperature and the discharge pressure of the refrigerant mixture are lower than the threshold temperature and the threshold pressure determined by the threshold value determination unit 270, by the disproportionation suppression unit 80 (step S25). When it is determined that the discharge temperature and the discharge pressure are lower than the threshold temperature and the threshold pressure (Yes in step S25), the control is ended. When it is determined that the discharge temperature and the discharge pressure are the threshold temperature and the threshold pressure or greater (No in step S25), the rotation speed of the compressor 3 is decreased, or the expansion unit 6 is opened by the disproportionation suppression unit 80 (step S26). Thereby, the discharge temperature and the discharge pressure are set to be lower than the threshold temperature and the threshold pressure. Thereafter, the control is ended.

As described above, in the air-conditioning apparatus 200 according to the third embodiment, the threshold value determination unit 270 determines the threshold temperature and the threshold pressure, from the composition $\alpha$ acquired by the composition acquisition unit 260, and the disproportionation suppression unit 80 sets the discharge temperature and the discharge pressure to be lower than the threshold temperature and the threshold pressure. Consequently, disproportionation of the HF01123 refrigerant can be suppressed.

Further, the third embodiment uniquely obtains the composition $\alpha$ of the HF01123 refrigerant. Consequently, the discharge pressure and the discharge temperature at which disproportionation occurs are grasped more accurately. Accordingly, safety in using the air-conditioning apparatus 200 is enhanced. Further, in the third embodiment, the refrigerant mixture is the mixture in which refrigerants having a global warming potential (GWP) of zero, such as HF01123 refrigerant, HF01234yf and HF01234ze, are mixed. Consequently, environmental performance is high.

Note that the air-conditioning apparatus 1 according to the first embodiment, the air-conditioning apparatus 100 according to the second embodiment, and the air-conditioning apparatus 200 according to the third embodiment can be used by being properly combined.

Reference Signs List

1 air-conditioning apparatus 2 refrigerant circuit 3 compressor 4 four-way valve 5 first heat exchanger 5a first fan 6 expansion unit 7 second heat exchanger 7a second fan 20 discharge pressure detection unit 21 discharge temperature detection unit 22 condensing temperature detection unit

22a first condensing temperature detection unit 22b second condensing temperature detection unit 23 evaporating temperature detection unit 24 power detection unit 30 bypass 31 bypass pipe 32 cooler 33 bypass expansion unit 40 bypass pressure detection unit 41 bypass temperature detection unit 50 controller 60 composition acquisition unit 70 threshold value determination unit 80 disproportionation suppression unit 100 air-conditioning apparatus 102 refrigerant circuit

150 controller 160 composition acquisition unit 161 assumed value determination unit 162 density calculation unit 163 composition calculating unit

164 determination unit 165 composition determination unit 170 threshold value determination unit 200 air-conditioning apparatus 202 refrigerant circuit 250 controller 260 composition acquisition unit 270 threshold value determination unit

## Claims

1. An air-conditioning apparatus, comprising:

   a refrigerant circuit (2) in which a refrigerant mixture containing a refrigerant capable of undergoing disproportionation flows, and a compressor (3), a first heat exchanger (5), an expansion unit (6) and a second heat exchanger (7) are connected by pipes; and
   a controller (50) configured to control an operation of the refrigerant circuit (2) and comprising
   a composition acquisition unit configured to acquire a composition of the refrigerant;
   a threshold value determination unit configured to determine a threshold temperature and a threshold pressure, based on the composition acquired by the composition acquisition unit and a temperature pressure table representing a relation of a discharge temperature and a discharge pressure, and
   a disproportionation suppression unit (80) configured to set the discharge temperature and the discharge pressure of the refrigerant to be respectively lower than the threshold temperature and the threshold pressure determined by the threshold value determination unit, to suppress disproportionation of the refrigerant mixture, wherein the disproportionation suppression unit (80) is configured to adjust a rotation speed of the compressor (3), and/or
   wherein the disproportionation suppression unit (80) is configured to adjust an opening degree of the expansion unit (6).

2. The air-conditioning apparatus of claim 1,

   wherein the refrigerant circuit (2) comprises
   a discharge pressure detection unit (20) provided at a discharge side of the compressor (3), and configured to detect the discharge pressure of the refrigerant mixture, and
   a condensing temperature detection unit (22) provided at an outlet side of one serving as a condenser, of the first heat exchanger (5) and the second heat exchanger (7), and configured to detect a condensing temperature of the refrigerant mixture, and
   the composition acquisition unit (60) is configured to acquire
   a composition of the refrigerant capable of undergoing disproportionation, based on the discharge pressure detected by the discharge pressure detection unit (20), the condensing temperature detected by the condensing temperature detection unit (22), and a composition table representing a relation of the discharge pressure, the condensing temperature and the composition.

3. The air-conditioning apparatus of claim 1 or 2,

   wherein the refrigerant circuit (2) comprises
   a discharge temperature detection unit (21) provided at a discharge side of the compressor (3), and configured to detect the discharge temperature of the refrigerant mixture,
   a condensing temperature detection unit (22) provided at an outlet side of one serving as a condenser, of the first heat exchanger (5) and the second heat exchanger (7), and configured to detect a condensing temperature of the refrigerant mixture,
   an evaporating temperature detection unit (23) provided at an outlet side of one serving as an evaporator, of the first heat exchanger (5) and the second heat exchanger (7), and configured to detect an evaporating temperature of the refrigerant mixture, and
   a power detection unit (24) configured to detect power consumption of the compressor (3), and
   the composition acquisition unit (160) comprises
   an assumed value determination unit (161) configured to determine a composition assumed value of the refrigerant capable of undergoing disproportionation,
   a density calculation unit (162) configured to calculate a suction density with which the refrigerant capable of undergoingdisproportionation is sucked by the compressor (3), based on the discharge temperature detected by the discharge temperature detection unit (21), the condensing temperature detected by the condensing temperature detection unit (22), the evaporating temperature detected by the evaporating temperature detection unit (23), the power consumption detected by the power detection unit (24), and the composition assumed value determined by the assumed value determination unit (161),

a composition calculating unit (163) configured to calculate a composition calculation value of the refrigerant to undergo disproportionation, based on the suction density calculated in the density calculation unit (162),

a determination unit (164) configured to determine whether or not the composition assumed value determined by the assumed value determination unit (161) and the composition calculation value calculated in the composition calculating unit (163) agree with each other, and

a composition determination unit (165) configured to determine the composition assumed value as the composition of the refrigerant to undergo disproportionation, when it is determined that the composition assumed value and the composition calculation value agree with each other in the determination unit (164).

4. The air-conditioning apparatus of any one of claims 1 to 3,
wherein the threshold value determination unit (70) determines the threshold temperature and the threshold pressure, based on a maximum value of the composition acquired by the composition acquisition unit (60), and the temperature and pressure table.

5. The air-conditioning apparatus of any one of claims 1 to 4, further comprising:

a bypass bypassing a discharge side of the compressor (3) and a suction side of the compressor (3),
wherein the bypass comprises
a cooler (32) configured to cool the refrigerant mixture discharged from the compressor (3),
a bypass expansion unit (33) expanding the refrigerant mixture cooled in the cooler (32),
a bypass pressure detection unit (40) provided at an outlet side of the bypass expansion unit (33), and configured to detect a bypass pressure of the refrigerant mixture, and
a bypass temperature detection unit (41) provided at the outlet side of the bypass expansion unit (33), and configured to detect a bypass temperature of the refrigerant mixture, and
the composition acquisition unit (60) is configured to acquire the composition of the refrigerant capable of undergoing disproportionation, based on the bypass pressure detected by the bypass pressure detection unit (40), the bypass temperature detected by the bypass temperature detection unit (41), and a composition table representing a relation of the discharge pressure, a condensing temperature and the composition.

6. The air-conditioning apparatus of any one of claims 1 to 5,
wherein the refrigerant capable of undergoing disproportionation comprises HFO1123 refrigerant.

**Patentansprüche**

1. Klimaanlagengerät, das Folgendes umfasst:

einen Kühlmittelkreislauf (2), in dem ein Kühlmittelgemisch, das ein Kühlmittel enthält, das dazu in der Lage ist, eine Disproportionierung zu durchlaufen, strömt und in dem ein Kompressor (3), ein erster Wärmetauscher (5), eine Expansionseinheit (6) und ein zweiter Wärmetauscher (7) durch Rohre verbunden sind; und
eine Steuerung (50), die konfiguriert ist, um einen Betrieb des Kühlmittelkreislaufs (2) zu steuern und Folgendes umfasst:

eine Zusammensetzungserfassungseinheit, die konfiguriert ist, um eine Zusammensetzung des Kühlmittels zu erfassen;
eine Schwellenwertbestimmungseinheit, die konfiguriert ist, um eine Schwellentemperatur und einen Schwellendruck basierend auf der durch die Zusammensetzungserfassungseinheit erfassten Zusammensetzung und einer Temperatur-Druck-Tabelle, die eine Beziehung zwischen einer Ausgabetemperatur und einem Ausgabedruck darstellt, zu bestimmen und
eine Disproportionierungsunterdrückungseinheit (80), die konfiguriert ist, um die Ausgabetemperatur und den Ausgabedruck des Kühlmittels als entsprechend niedriger als die Schwellentemperatur und den Schwellendruck einzustellen, die durch die Schwellenwertbestimmungseinheit bestimmt wurden, um die Disproportionierung des Kühlmittelgemischs zu unterdrücken,
wobei die Disproportionierungsunterdrückungseinheit (80) konfiguriert ist, um eine Drehzahl des Kompressors (3) anzupassen und/oder
wobei die Disproportionierungsunterdrückungseinheit (80) konfiguriert ist, um einen Öffnungsgrad der Expansionseinheit (6) anzupassen.

2. Klimaanlagengerät nach Anspruch 1,
wobei der Kühlmittelkreislauf (2) Folgendes umfasst:

eine Ausgabedruckdetektionseinheit (20), die auf einer Ausgabeseite des Kompressors (3) bereitgestellt und konfiguriert ist, um den Ausgabedruck des Kühlmittelgemischs zu detektieren und
eine Kondensationstemperaturdetektionseinheit (22), die an einer Auslassseite eines Elements, das als Kondensator dient, des ersten Wärmetauschers (5) und des zweiten Wärmetauschers (7) bereitgestellt und konfiguriert ist, um eine Kondensationstemperatur des Kühlmittelgemischs zu detektieren und
wobei die Zusammensetzungserfassungseinheit (60) konfiguriert ist, um eine Zusammensetzung des Kühlmittels, das dazu in der Lage ist, eine Disproportionierung zu durchlaufen, basierend auf dem Ausgabedruck, der durch die Ausgabedruckdetektionseinheit (20) detektiert wurde, der Kondensationstemperatur, die durch die Kondensationstemperaturdetektionseinheit (22) detektiert wurde, und einer Zusammensetzungstabelle, die eine Beziehung zwischen dem Ausgabedruck, der Kondensationstemperatur und der Zusammensetzung darstellt, zu erfassen.

3. Klimaanlagengerät nach Anspruch 1 oder 2,

wobei der Kühlmittelkreislauf (2) Folgendes umfasst:

eine Ausgabetemperaturdetektionseinheit (21), die an einer Ausgabeseite des Kompressors (3) bereitgestellt und konfiguriert ist, um die Ausgabetemperatur des Kühlmittelgemischs zu detektieren,
eine Kondensationstemperaturdetektionseinheit (22), die an einer Auslassseite eines Elements, das als Kondensator dient, des ersten Wärmetauschers (5) und des zweiten Wärmetauschers (7) bereitgestellt und konfiguriert ist, um eine Kondensationstemperatur des Kühlmittelgemischs zu detektieren,
eine Verdampfungstemperaturdetektionseinheit (23), die an einer Auslassseite eines Elements, das als Kondensator dient, des ersten Wärmetauschers (5) und des zweiten Wärmetauschers (7) bereitgestellt und konfiguriert ist, um eine Verdampfungstemperatur des Kühlmittelgemischs zu detektieren und
eine Leistungsdetektionseinheit (24), die konfiguriert ist, um den Leistungsverbrauch des Kompressors (3) zu detektieren und

wobei die Zusammensetzungserfassungseinheit (160) Folgendes umfasst:

eine Bestimmungseinheit (161) für einen angenommenen Wert, die konfiguriert ist, um einen angenommenen Zusammensetzungswert des Kühlmittels zu bestimmen, das dazu in der Lage ist, eine Disproportionierung zu durchlaufen,
eine Dichteberechnungseinheit (162), die konfiguriert ist, um eine Saugdichte, mit der das Kühlmittel, das dazu in der Lage ist, eine Disproportionierung zu durchlaufen, durch den Kompressor (3) angesaugt wird, basierend auf der Abgabetemperatur, die durch die Abgabetemperaturdetektionseinheit (21) detektiert wird, der Kondensationstemperatur, die durch die Kondensationstemperaturdetektionseinheit (22) detektiert wird, der Verdampfungstemperatur, die durch die Verdampfungstemperaturdetektionseinheit (23) detektiert wird, dem Leistungsverbrauch, der durch die Leistungsdetektionseinheit (24) detektiert wird, und dem angenommenen Zusammensetzungswert, der durch die Bestimmungseinheit (161) für einen angenommenen Wert bestimmt wird, zu berechnen,
eine Zusammensetzungsberechnungseinheit (163), die konfiguriert ist, um einen Zusammensetzungsberechnungswert des eine Disproportionierung zu durchlaufenden Kühlmittels basierend auf der in der Dichteberechnungseinheit (162) berechneten Saugdichte zu berechnen,
eine Bestimmungseinheit (164), die konfiguriert ist, um zu bestimmen, ob der angenommene Zusammensetzungswert, der durch die Bestimmungseinheit (161) für den angenommenen Wert bestimmt wurde, und der Zusammensetzungsberechnungswert, der in der Zusammensetzungsberechnungseinheit (163) berechnet wurde, miteinander übereinstimmen und
eine Zusammensetzungsbestimmungseinheit (165), die konfiguriert ist, um den angenommenen Zusammensetzungswert als die Zusammensetzung des Kühlmittels, das eine Disproportionierung zu durchlaufen hat, zu bestimmen, wenn bestimmt wird, dass der angenommene Zusammensetzungswert und der Zusammensetzungsberechnungswert in der Bestimmungseinheit (164) miteinander übereinstimmen.

4. Klimaanlagengerät nach einem der Ansprüche 1 bis 3,

wobei die Schwellenwertbestimmungseinheit (70) die Schwellentemperatur und den Schwellendruck basierend auf einem Maximalwert der Zusammensetzung, die durch die Zusammensetzungserfassungseinheit (60) erfasst wurde, und der Temperatur- und Drucktabelle bestimmt.

5. Klimaanlagengerät nach einem der Ansprüche 1 bis 4, das ferner Folgendes umfasst:

einen Bypass, der eine Ausgabeseite des Kompressors (3) und eine Ansaugseite des Kompressors (3) überbrückt,
wobei der Bypass Folgendes umfasst:

einen Kühler (32), der konfiguriert ist, um das Kühlmittelgemisch, das aus dem Kompressor (3) ausgegeben wurde, zu kühlen,
eine Bypassexpansionseinheit (33), die das Kühlmittelgemisch, das in dem Kühler (32) gekühlt wird, expandiert,
eine Bypassdruckdetektionseinheit (40), die an einer Auslassseite der Bypassexpansionseinheit (33) bereitgestellt und konfiguriert ist, um einen Bypassdruck des Kühlmittelgemischs zu detektieren und
eine Bypasstemperaturdetektionseinheit (41), die an der Auslassseite der Bypassexpansionseinheit (33) bereitgestellt und konfiguriert ist, um eine Bypasstemperatur des Kühlmittelgemischs zu detektieren und

wobei die Zusammensetzungserfassungseinheit (60) konfiguriert ist, um die Zusammensetzung des Kühlmittels, das dazu in der Lage ist eine Disproportionierung zu durchlaufen, basierend auf dem Bypassdruck, der durch die Bypassdruckdetektionseinheit (40) detektiert wurde, die Bypasstemperatur, die durch die Bypasstemperaturdetektionseinheit (41) detektiert wurde, und einer Zusammensetzungstabelle, die eine Beziehung zwischen dem Ausgabedruck, einer Kondensationstemperatur und der Zusammensetzung darstellt, zu erfassen.

6. Klimaanlagengerät nach einem der Ansprüche 1 bis 5,
wobei das Kühlmittel, das dazu in der Lage ist, eine Disproportionierung zu durchlaufen, HFO1123-Kühlmittel umfasst.

**Revendications**

1. Climatiseur, comprenant :

un circuit de frigorigène (2) dans lequel circule un mélange de frigorigène contenant un frigorigène capable de subir des flux de dismutation, et un compresseur (3), un premier échangeur de chaleur (5), une unité de détente (6) et un second échangeur de chaleur (7) sont raccordés par des conduites ; et
un dispositif de commande (50) configuré pour commander un fonctionnement du circuit de frigorigène (2) et comprenant
une unité d'acquisition de composition configurée pour acquérir une composition du frigorigène ;
une unité de détermination de valeur de seuil configurée pour déterminer une température de seuil et une pression de seuil, sur la base de la composition acquise par l'unité d'acquisition de composition et d'un tableau de température/pression indiquant une relation entre une température de décharge et d'une pression de décharge, et
une unité de suppression de dismutation (80) configurée pour définir la température de décharge et la pression de décharge du frigorigène pour qu'elles soient respectivement inférieures à la température de seuil et à la pression de seuil déterminées par l'unité de détermination de valeur de seuil, afin de supprimer la dismutation du mélange de mélange de frigorigène,
dans lequel l'unité de suppression de dismutation (80) est configurée pour ajuster une vitesse de rotation du compresseur (3), et/ou
dans lequel l'unité de suppression de dismutation (80) est configurée pour ajuster un degré d'ouverture de l'unité de détente (6).

2. Climatiseur selon la revendication 1,

dans lequel le circuit de frigorigène (2) comprend
une unité de détection de pression de décharge (20) prévue au niveau d'un côté de décharge du compresseur (3), et configurée pour détecter la pression de décharge du mélange de frigorigène, et

une unité de détection de température de condensation (22) prévue au niveau d'un côté de sortie d'un servant de condenseur parmi le premier échangeur de chaleur (5) et le second échangeur de chaleur (7), et configurée pour détecter une température de condensation du mélange de frigorigène, et
l'unité d'acquisition de composition (60) est configurée pour acquérir
une composition du frigorigène capable de subir une dismutation, sur la base de la pression de décharge détectée par l'unité de détection de pression de décharge (20), de la température de condensation détectée par l'unité de détection de température de condensation (22), et d'un tableau de composition représentant une relation de la pression de décharge, de la température de condensation et de la composition.

3. Climatiseur selon la revendication 1 ou 2,

dans lequel le circuit de frigorigène (2) comprend
une unité de détection de température de décharge (21) prévue au niveau d'un côté de décharge du compresseur (3), et configurée pour détecter la température de décharge du mélange de frigorigène,
une unité de détection de température de condensation (22) prévue au niveau d'un côté de sortie d'un servant de condenseur parmi le premier échangeur de chaleur (5) et le second échangeur de chaleur (7), et configurée pour détecter une température de condensation du mélange de frigorigène,
une unité de détection de température d'évaporation (23) prévue au niveau d'un côté de sortie d'un servant d'évaporateur parmi le premier échangeur de chaleur (5) et le second échangeur de chaleur (7), et configurée pour détecter une température d'évaporation du mélange de frigorigène, et
une unité de détection de puissance (24) configurée pour détecter une consommation de puissance du compresseur (3), et
l'unité d'acquisition de composition (160) comprend une unité de détermination de valeur supposée (161) configurée pour déterminer une valeur supposée de composition du frigorigène pouvant subir une dismutation,
une unité de calcul de densité (162) configurée pour calculer une densité d'aspiration avec laquelle le frigorigène pouvant subir une dismutation est aspiré par le compresseur (3), sur la base de la température de décharge détectée par l'unité de détection de température de décharge (21), de la température de condensation détectée par l'unité de détection de température de condensation (22), de la température d'évaporation détectée par l'unité de détection de température d'évaporation (23), de la consommation de puissance détectée par l'unité de détection de puissance (24) et de la valeur supposée de composition déterminée par l'unité de détermination de valeur supposée (161),
une unité de calcul de composition (163) configurée pour calculer une valeur de calcul de composition du frigorigène à soumettre à une dismutation, sur la base de la densité d'aspiration calculée dans l'unité de calcul de densité (162),
une unité de détermination (164) configurée pour déterminer si oui ou non la valeur supposée de composition déterminée par l'unité de détermination de valeur supposée (161) et la valeur de calcul de composition calculée dans l'unité de calcul de composition (163) sont en accord l'une avec l'autre, et
une unité de détermination de composition (165) configurée pour déterminer la valeur supposée de composition en tant que composition du frigorigène pouvant subir une dismutation, lorsqu'il est déterminé que la valeur supposée de composition et la valeur de calcul de composition sont en accord l'une avec l'autre dans l'unité de détermination (164).

4. Climatiseur selon l'une quelconque des revendications 1 à 3, dans lequel l'unité de détermination de valeur de seuil (70) détermine la température de seuil et la pression de seuil, sur la base d'une valeur maximale de la composition acquise par l'unité d'acquisition de composition (60), et du tableau de température/pression.

5. Climatiseur selon l'une quelconque des revendications 1 à 4, comprenant en outre :

une dérivation contournant un côté de décharge du compresseur (3) et un côté d'aspiration du compresseur (3), dans lequel la dérivation comprend
un refroidisseur (32) configuré pour refroidir le mélange de frigorigène évacué depuis le compresseur (3),
une unité de détente de dérivation (33) détendant le mélange de frigorigène refroidi dans le refroidisseur (32),
une unité de détection de pression de dérivation (40) prévue au niveau d'un côté de sortie de l'unité de détente de dérivation (33), et configurée pour détecter une pression de dérivation du mélange de frigorigène, et
une unité de détection de température de dérivation (41) prévue sur le côté de sortie de l'unité de détente de dérivation (33), et configurée pour détecter une température de dérivation du mélange de frigorigène, et
l'unité d'acquisition de composition (60) est configurée pour acquérir la composition du frigorigène pouvant subir une dismutation, sur la base de la pression de dérivation détectée par l'unité de détection de pression de dérivation (40), de la température de dérivation détectée par l'unité de détection de température de dérivation (41), et d'un tableau de composition représentant une relation de la pression de décharge, d'une température de condensation et de la composition.

6. Climatiseur selon l'une quelconque des revendications 1 à 5,
dans lequel le frigorigène pouvant subir une de dismutation comprend un frigorigène HFO1123.

FIG. 1

FIG. 2

## FIG. 3

TWO-PHASE REGION
TEMPERATURE

PRESSURE: CONSTANT

QUALITY x=1 (SATURATED VAPOR LINE)

$T_1$

COMPOSITION
RANGE

QUALITY x=0 (SATURATED LIQUID LINE)

$\alpha$

0%   100%   COMPOSITION

## FIG. 4

SATURATED VAPOR
TEMPERATURE

QUALITY x=1 (SATURATED VAPOR LINE)

PRESSURE
LARGE

PRESSURE
SMALL

PRESSURE : Pd

$\alpha$

0%   100%   COMPOSITION

18

FIG. 5

TEMPERATURE

DISPROPORTIONATION
OCCURRENCE REGION

Td

COMPOSITION SMALL

COMPOSITION LARGE

PRESSURE

Pd

FIG. 6

START CONTROL

S1
CERTAIN
TIME PERIOD
ELAPSED?          No

Yes

DETECT OPERATION STATE OF
REFRIGERANT CIRCUIT          S2

CALCULATE MAXIMUM VALUE $\alpha$ max OF
COMPOSITION OF HFO1123 REFRIGERANT          S3

DETERMINE THRESHOLD TEMPERATURE
AND THRESHOLD PRESSURE          S4

S5
DISCHARGE
TEMPERATURE,
DISCHARGE PRESSURE <          No
THRESHOLD TEMPER-
ATURE, THRESHOLD
PRESSURE

S6
DECREASE ROTATION
SPEED OF COMPRESSOR
INCREASE OPENING
DEGREE OF EXPANSION UNIT

Yes

END CONTROL

## FIG. 7

## FIG. 8

| | |
|---|---|
| 21 — DISCHARGE TEMPERATURE DETECTION UNIT | 161 — ASSUMED VALUE DETER-MINATION UNIT |
| 22 — CONDENSING TEMPERATURE DETECTION UNIT | 162 — DENSITY CALCULATION UNIT |
| 23 — EVAPORATING TEMPERATURE DETECTION UNIT | 163 — COMPOSITION CALCULATION UNIT |
| 24 — POWER DETECTION UNIT | 164 — DETER-MINATION UNIT |

COMPOSITION DETER-MINATION UNIT  165

THRESHOLD VALUE DETER-MINATION UNIT

DISPROPOR-TIONATION SUPPRESSION UNIT

3 — COM-PRESSOR

6 — EXPAN-SION UNIT

150    160    170    180

## FIG. 9

START CONTROL

S11 — CERTAIN TIME PERIOD ELAPSED? — No

Yes

DETECT OPERATION STATE OF REFRIGERANT CIRCUIT — S12

DETERMINE COMPOSITION ASSUMED VALUE $\alpha_s$ OF HFO1123 REFRIGERANT — S13

CALCULATE DISCHARGE PRESSURE, SUCTION PRESSURE — S14

CALCULATE SUCTION DENSITY FROM POWER CONSUMPTION — S15

CALCULATE COMPOSITION CALCULATION VALUE $\alpha_c$ OF HFO1123 — S16

S17 — $\alpha_s = \alpha_c$? — No

Yes

DETERMINE THRESHOLD TEMPERATURE AND THRESHOLD PRESSURE — S18

S19 — DISCHARGE TEMPERATURE, DISCHARGE PRESSURE < THRESHOLD TEMPERATURE, THRESHOLD PRESSURE — No

S20 — DECREASE ROTATION SPEED OF COMPRESSOR INCREASE OPENING DEGREE OF EXPANSION UNIT

Yes

END CONTROL

## FIG. 10

## FIG. 11

## FIG. 12

SATURATED LIQUID
TEMPERATURE

CONSTANT PRESSURE CONDITION

$T_4$

QUALITY x=0 (SATURATED LIQUID LINE)

$\alpha$

0%   DETECTED
COMPOSITION          100%

# FIG. 13

```
        ( START CONTROL )
                |
                v
         /  CERTAIN    \    S21
        <  TIME PERIOD  >------ No
         \  ELAPSED?   /
                |
              Yes
                |
                v
    +--------------------------+
    |    DETECT OPERATION      |  S22
    | STATE OF BYPASS CIRCUIT  |
    +--------------------------+
                |
                v
    +--------------------------+
    | CALCULATE COMPOSITION α   |  S23
    | OF HFO1123 REFRIGERANT   |
    +--------------------------+
                |
                v
    +---------------------------------+
    | DETERMINE THRESHOLD TEMPERATURE |  S24
    |    AND THRESHOLD PRESSURE       |
    +---------------------------------+
                |
                v              S25
         /   DISCHARGE    \
        /  TEMPERATURE,    \
       <  DISCHARGE PRESSURE < >---- No
        \ THRESHOLD TEMPER- /            |
         \ ATURE, THRESHOLD/             v
          \  PRESSURE   /       +--------------------------+
                |                | DECREASE ROTATION        | S26
              Yes               | SPEED OF COMPRESSOR      |
                |                | INCREASE OPENING         |
                |                | DEGREE OF EXPANSION UNIT |
                |                +--------------------------+
                |                          |
                v<-------------------------+
         ( END CONTROL )
```

## REFERENCES CITED IN THE DESCRIPTION

**Patent documents cited in the description**

- JP 2948105 B
- WO 2012172597 A
- JP 2008128493 A
- EP 2306122 A